# EUROPÄISCHE PATENTSCHRIFT

(11) **EP 2 258 584 B1**
(45) Veröffentlichungstag und Bekanntmachung des Hinweises auf die Patenterteilung: **01.08.2018**
(21) Anmeldenummer: 10004838.8
(22) Anmeldetag: 07.05.2010
(51) Int. Cl.: B60N 2/56

(54) **Rückenlehne für einen Fahrzeugsitz**
Backrest for a car seat
Dossier pour un siège de véhicule

(30) Priorität: 04.06.2009 DE 102009023698
(43) Veröffentlichungstag der Anmeldung: 08.12.2010
(73) Patentinhaber: Bayerische Motoren Werke Aktiengesellschaft, 80809 München (DE)
(72) Erfinder: Nordberg, Peter, 85774 Unterföhring (DE); Giese, Andreas, 82061 Neuried (DE); Graber, Ulrich, 85307 Paunzhausen (DE)

(56) Entgegenhaltungen:
- EP-A2- 1 323 573
- DE-A1-102004 043 923
- US-A1- 2006 273 646
- US-A1- 2008 168 787
- Anonymous: "Fan (mechanical) - Wikipedia, the free encyclopedia", , 23 April 2009 (2009-04-23), XP055442760, Retrieved from the Internet: URL:https://web.archive.org/web/2009042303 4804/http://en.wikipedia.org/wiki/Fan_(mec hanical) [retrieved on 2018-01-19]

## Beschreibung

Die Erfindung bezieht sich auf eine Rückenlehne für einen Fahrzeugsitz eines Kraftfahrzeuges.

Sogenannte Nackenwärmer, die insbesondere bei Cabrio-Fahrzeugsitzen angewandt werden, sind im Stand der Technik allgemein bekannt. Verwiesen wird beispielsweise auf die DE 10 2006 031 260 A1, die DE 10 2004 024 261 B3, die DE 196 54 370 C1 oder die DE 10 2004 060 460 A1.

Um die mit Nackenwärmem ausgerüsteten Fahrzeugsitze wie nicht ausgerüstete Sitze verstellbar zu erhalten, ist man dazu übergegangen, den Nackenwärmer in die Rückenlehne des Fahrzeugsitzes einzubauen.

Allgemein besteht ein Nackenwärmer aus einem Luftführungskanal, an dessen Beginn ein Gebläse sitzt, das Luft durch Ansaugöffnungen (Schlitze) in der Rückenlehne ansaugt und über einen PTC-Heizer zu einer Luftausströmöffnung führt, die in der Regel an der oberen Schmalseite der Rückenlehne angeordnet ist. Auch ist es bekannt, die Luftaustrittsöffnungen im Schulterbereich auf der Vorderseite der Rückenlehne anzuordnen.

Aus der DE 10 2004 043 923 A1 ist ein Fahrzeugsitz mit einem Nackenwärmer bekannt, dessen Luftführungskanal eingangsseitig in zwei Arme aufgeteilt ist, wobei im Eingangsbereich jedes Arms ein Gebläse angeordnet ist.

Allen bisher vorgeschlagenen Lösungen gemeinsam ist der Nachteil, dass sie einigen Bauraum beanspruchen, der in den Rückenlehnen nicht ohne weiteres vorhanden ist. Deshalb werden in der Regel die Rückenlehnen in ihrer Dicke größer.

Aufgabe der vorliegenden Erfindung ist es, hier Abhilfe zu schaffen und einen Nackenwärmer aufzuzeigen, der sich problemlos in bestehenden Raum von Rückenlehnen von Fahrzeugsitzen einbauen lässt.

Diese Aufgabe wird erfindungsgemäß durch die Merkmale des ersten Anspruchs gelöst.

Die Lösung baut auf der bereits aus der DE 10 2004 043 923 A1 bekannten Erkenntnis auf, dass nicht ein Gebläse mit einer Ansaugöffnung, das aufgrund der geforderten Volumina und Drücke relativ großbauend sein muss, vorgesehen wird, sondern dass der Luftführungskanal in seinem Eingangsbereich mindestens zwei Arme aufweist, die sich dann zu einem einzigen Luftaustrittskanal vereinen. Damit ist es möglich, die Luftansaugöffnungen dorthin zu legen, wo sie am sinnvollsten angeordnet werden können. Auch können diese Arme den Gegebenheiten im Innenraum der Rückenlehne angepasst werden, so dass die Rückenlehne selbst nicht in ihrer Stärke vergrößert werden muss. In jedem Arm ist ein Gebläse angeordnet, wodurch sich ein geringer Bauraumbedarf ergibt.

Erfindungsgemäß sind die Gebläse in den Luftansaugöffnungen am Beginn der beiden Arme als Radialgebläse ausgebildet, die in den

Luftansaugöffnungen bündig mit der Kontur des Luftführungskanals angeordnet sind. Radialgebläse sind kleinbauende Gebläse. Insbesondere weisen Radialgebläse eine geringe Bautiefe auf, so dass die in die Rückenlehne integrierte Vorrichtung zum Zuführen eines Luftstroms mit einer insgesamt geringen Bautiefe ausgeführt werden kann, mit dem Vorteil, dass die Rückenlehne selbst nicht in ihrer Dicke vergrößert werden muss. Außerdem erzeugen Radialgebläse einen relativ hohen Luftdruck, so dass die Gebläsedrehzahlen herabgesetzt werden können. Dies hat den Vorteil, dass die Gebläse relativ leise laufen, so dass sie im Stand des Fahrzeugs, wenn Windgeräusche fortfallen, praktisch nicht zu hören sind.

Durch die Erfindung wird ein Nackenwärmer geschaffen, der kleinbauend ist und sich ohne Vergrößerung des Volumens einer Fahrzeugrückenlehne in diese problemlos einbauen lässt. Seine Wirksamkeit wird dadurch nicht eingeschränkt.

In vorteilhafter Ausgestaltung der Erfindung verläuft der Luftführungskanal im Wesentlichen in einer Ebene parallel zur Vorder- und zur Rückseite der Rückenlehne. Durch diese Anordnung kann die Dicke der Rückenlehne weiter verringert werden. Im Unterschied hierzu verläuft bei dem aus der DE 10 2004 043 923 A1 bekannte Fahrzeugsitz der Luftführungskanal im Wesentlichen in einer etwa horizontal ausgerichteten Ebene quer durch die gesamte Tiefenerstreckung der Kopfstütze, also in einer Ebene, die senkrecht zur Vorder- und zur Rückseite der Rückenlehne verläuft.

Die weiteren Unteransprüche 3 bis 10 stellen bevorzugte Ausführungsformen der Erfindung dar.

Durch die Weiterbildung nach Anspruch 3 wird die Herstellung vereinfacht, wenn es sich um Gleichteile handelt. Auch wird die Ersatzteilhaltung dadurch einfacher.

Die Weiterbildung nach Anspruch 4 hat den Vorteil, dass sich der Luftstrom in Menge und Druck einfacher einstellen lässt, wenn die Gebläse mit unterschiedlicher Leistung arbeiten können. Auch ist es hierbei möglich, bei bestimmten Fahrzeugzuständen nur ein Gebläse laufen zu lassen und erst bei höheren Anforderungen (z.B. Maximalleistung) beide anzutreiben.

Die Weiterbildung nach Anspruch 5 verkleinert den Bauraum für das Heizelement.

Die Weiterbildung nach Anspruch 6 und 7 bietet sich insbesondere dann an, wenn Gebläse unterschiedlicher Leistungen verwendet werden, die dann entsprechend der geforderten Luftmenge und des geforderten Luftdruckes gesteuert werden.

Die Weiterbildung nach den Ansprüchen 8 bis 10 beschreibt - je nach Einbauverhältnissen - unterschiedliche Anordnungen für die Ansaugöffnung innerhalb der Rückenlehne oder zum Ansaugen von Luft außerhalb der Rückenlehne.

Im Folgenden wird die Erfindung anhand eines bevorzugten Ausführungsbeispiels schematisch dargestellt. Es stellen dar:
- Figur 1: Eine schematisierte Ansicht einer Rückenlehne eines Fahrzeugsitzes mit eingebautem Nackenwärmer;
- Figur 2: eine Seitenansicht der Anordnung gemäß Figur 1;
- Figur 3a: alternative Ausgestaltungen des Nackenwärmers nach Figur 1;
- Figur 4: eine perspektivische Ansicht des Gehäuses des Nackenwärmers.

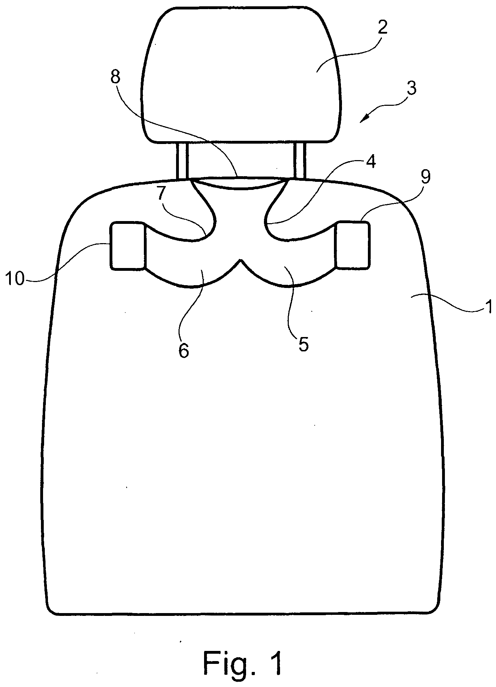

Figur 1 stellt schematisiert eine Rückenlehne 1 eines Kraftfahrzeugsitzes dar. Am oberen Ende der Rückenlehne ist eine Kopfstütze 2 höhenverstellbar angeordnet.

Im oberen Bereich der Rückenlehne 1 ist ein Nackenwärmer 3 in die Rückenlehne eingebaut. Er besteht aus einem Luftführungskanal 4, der ansaugseitig zwei Arme 5, 6 aufweist, die als Luftansaugkanäle dienen. Im Rahmen der Erfindung ist es möglich, mehr als zwei Arme vorzusehen, insbesondere, wenn die baulichen Gegebenheiten innerhalb der Rückenlehne diese sinnvoll und/oder notwendig erscheinen lassen.

Die beiden Arme 5 und 6 vereinigen sich im Bereich 7 zu einem gemeinsamen Kanal, der in eine Austrittsöffnung 8 im oberen Bereich der Rückenlehne mündet.

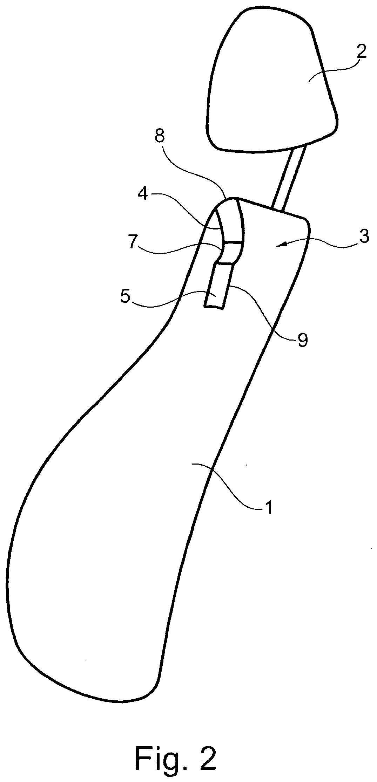

In Figur 2 ist eine Seitenansicht der Anordnung nach Figur 1 dargestellt. Hier sieht man deutlich, dass die Austrittsöffnung 8 im vorderen oberen Bereich der Rückenlehne derart angeordnet ist, dass die ausströmende Luft in Richtung auf den Schulter-/Nacken-/Kopfbereich einer auf den Sitz sitzenden Person gerichtet ist.

Angesaugt wird die Luft über Luftansaugöffnungen 9 und 10 am Beginn der beiden Arme 5 und 6 über je ein nicht näher dargestelltes Radialgebläse, das in den Luftansaugöffnungen 9 und 10 bündig mit der Kontur des Luftführungskanals 4 angeordnet ist.

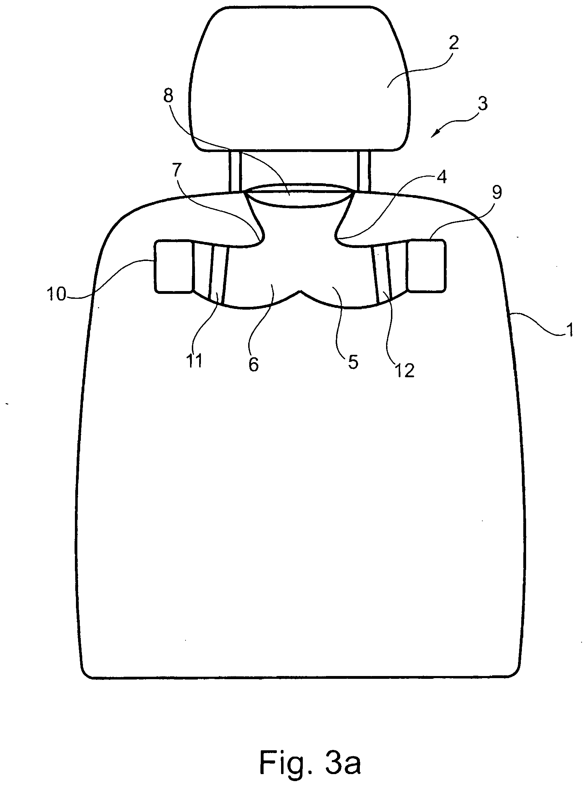

Figur 3a zeigt eine Vorderansicht der Rückenlehne 1 mit eingebautem Nackenwärmer 3. Hier ist sichtbar, dass in Luftströmungsrichtung hinter jedem Radialgebläse in jedem Arm 5, 6 ein Heizelement 11, 12 angeordnet ist.

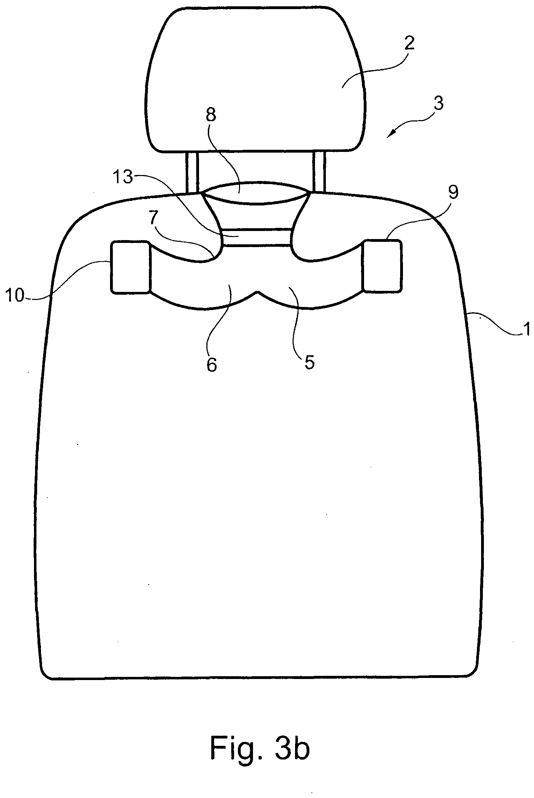

Alternativ hierzu kann ein einziges Heizelement 13 in Luftströmungsrichtung hinter dem Bereich 7 angeordnet werden, wie Figur 3b zeigt.

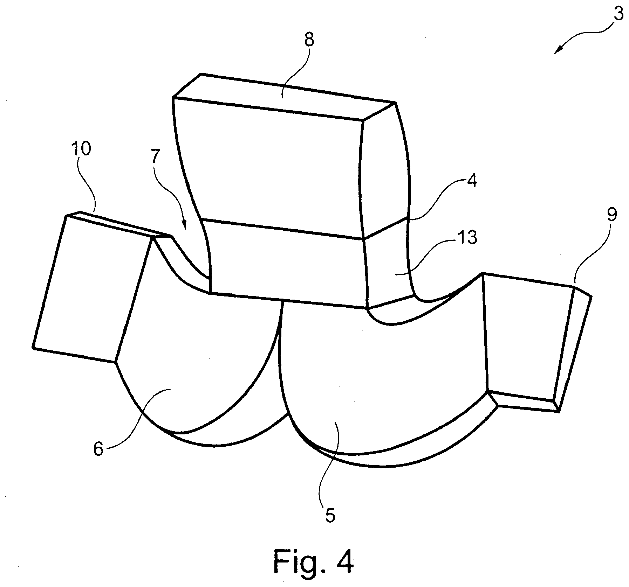

In Figur 4 ist eine schematisierte Ansicht des Nackenwärmers 3 im ausgebauten Zustand dargestellt. Der Luftführungskanal 4 des Nackenwärmers 3 kann aus zwei Kunststoffhalbschalen hergestellt werden, die nach Einbau der benötigten Elemente (Gebläse, Heizelement) miteinander trennbar oder untrennbar verbunden werden. Alternativ ist es möglich, das Heizelement/die Heizelemente als Einschubkassetten in den Luftführungskanal 4 des Nackenwärmers 3 vorzusehen. In diesem Fall kann das Gehäuse einteilig ausgeführt werden, wenn auch dafür Sorge getragen wird, dass jedes Gebläse zu Beginn der Arme 5, 6 durch die Luftansaugöffnungen 9, 10 eingebaut werden kann.

Der Luftführungskanal 4 des Nackenwärmers 3 wird über geeignete Befestigungselemente innerhalb der Rückenlehne 1 befestigt.

Die Luftansaugöffnungen 9, 10 der Arme 5, 6 können innerhalb der Rückenlehne 1 münden, sie können aber auch auf der Rückseite der Rückenlehne ins Freie münden. In diesem Fall sind sie bevorzugt mit Lüftungsgitter versehen. Auch ist es denkbar, diese Lüftungsgitter verschließbar auszugestalten.

Zur Steuerung des Heizelementes/der Heizelemente und der Gebläse wird in der Regel ein Steuergerät vorgesehen. Hierbei ist es denkbar, die Gebläse gemeinsam gleichzeitig, nacheinander oder einzeln anzusteuern.

Durch die Erfindung wird ein Nackenwärmer geschaffen, der kleinbauend ist und sich ohne Vergrößerung des Volumens einer Fahrzeugrückenlehne in diese problemlos einbauen zu lassen. Seine Wirksamkeit wird dadurch nicht eingeschränkt.

## Patentansprüche

1. Rückenlehne (1) für einen Fahrzeugsitz eines Kraftfahrzeuges, insbesondere eines Cabriolets, mit einer in der Rückenlehne (1) integrierten Vorrichtung zum Zuführen eines Luftstroms, insbesondere eines Warmluftstromes, in den Schulter-, Nacken- und/oder Kopfbereiche eines Sitzenden, bestehend aus einem Luftführungskanal (4), in den ein Gebläse und ein Heizelement (11, 12, 13) eingebaut ist und dessen Austrittsöffnung (8) im Bereich des oberen Teils der Rückenlehne (1) angeordnet ist, wobei der Luftführungskanal (4) eingangsseitig in mindestens zwei Arme (5, 6) aufgeteilt und in jedem Arm (5, 6) ein Gebläse angeordnet ist, wobei die Gebläse in den Eingangsbereichen der Arme (5, 6) in Luftansaugöffnungen (9, 10) bündig mit der Kontur des Luftführungskanals (4) angeordnet sind, **dadurch gekennzeichnet, dass** die Gebläse als Radialgebläse ausgebildet sind.

2. Rückenlehne nach Anspruch 1, **dadurch gekennzeichnet, dass** die Gebläse gleiche Abmessungen und gleiche Leistungen aufweisen.

3. Rückenlehne nach einem der vorangegangenen Ansprüche,
**dadurch gekennzeichnet, dass** die Gebläse gleiche Abmessungen, aber unterschiedliche Leistungen aufweisen.

4. Rückenlehne nach einem der vorangegangenen Ansprüche,
**dadurch gekennzeichnet, dass** in jedem Arm (5, 6) in Strömungsrichtung hinter dem Gebläse ein Heizelement (11, 12) angeordnet ist.

5. Rückenlehne nach einem der vorangegangenen Ansprüche,
**dadurch gekennzeichnet, dass** jedes Gebläse separat ansteuerbar ist.

6. Rückenlehne nach einem der vorangegangenen Ansprüche,
**dadurch gekennzeichnet, dass** jedes Heizelement separat ansteuerbar ist.

7. Rückenlehne nach einem der vorangegangenen Ansprüche,
**dadurch gekennzeichnet, dass** die Mündung jeder Luftansaugöffnung (9, 10) der Arme (5, 6) innerhalb der Rückenlehne (1) angeordnet sind.

8. Rückenlehne nach einem der vorangegangenen Ansprüche,
**dadurch gekennzeichnet, dass** die Mündung jeder Luftansaugöffnung (9, 10) an der Außenseite der Rückenlehne (1) vorgesehen ist.

9. Rückenlehne nach einem der vorangegangenen Ansprüche,
**dadurch gekennzeichnet, dass** die Mündung jeder Luftansaugöffnung (9, 10) an der Außenseite der Rücklehne (1) verschließbar ist.

## Claims

1. A backrest (1) for a vehicle seat of a motor vehicle, especially a cabriolet, with a device integrated in the backrest (1) for supplying an airflow, especially a warm airflow, to the shoulder, neck and/or head regions of a seated person, comprising an air duct (4) in which a blower and a heating element (11, 12, 13) are incorporated and the exit opening (8) of which is arranged in the region of the upper part of the backrest (1), wherein the air duct (4) on the entry side is divided into at least two arms (5, 6) and a blower is arranged in each arm (5, 6), wherein the blowers in the entry regions of the arms (5, 6) are arranged in air intake openings (9, 10) flush with the contour of the air duct (4), **characterised in that** the blowers are designed as radial blowers.

2. A backrest according to Claim 1, **characterised in that** the blowers have identical dimensions and identical performance.

3. A backrest according to one of the preceding claims, **characterised in that** the blowers have identical dimensions, but different performance.

4. A backrest according to one of the preceding claims, **characterised in that** a heating element (11, 12) is arranged in each arm (5, 6) in the direction of flow after the blower.

5. A backrest according to one of the preceding claims, **characterised in that** each blower can be driven separately.

6. A backrest according to one of the preceding claims, **characterised in that** each heating element can be driven separately.

7. A backrest according to one of the preceding claims, **characterised in that** the mouth of each air intake opening (9, 10) of the arms (5, 6) is arranged within the backrest (1).

8. A backrest according to one of the preceding claims, **characterised in that** the mouth of each air intake opening (9, 10) is provided on the outside of the backrest (1).

9. A backrest according to one of the preceding claims, **characterised in that** the mouth of each air intake opening (9, 10) can be closed on the outside of the backrest (1).

## Revendications

1. Dossier (1) destiné à un siège d'un véhicule automobile, en particulier d'un cabriolet comprenant un dispositif intégré dans le dossier (1) permettant d'introduire un flux d'air, en particulier d'un flux d'air chaud dans la zone des épaules, de la nuque et/ou de la tête d'un passager assis, constitué par un canal de guidage d'air (4) dans lequel sont montés un ventilateur et un élément chauffant (11, 12, 13) et dont l'ouverture de sortie (8) est située dans la zone de la partie supérieure du dossier (1),
le canal de guidage d'air (4) étant subdivisé côté entrée en au moins deux branches (5, 6) et dans chaque branche (5, 6) étant monté un ventilateur, les ventilateurs étant montés dans les zones d'entrée des branches (5, 6) dans des ouvertures d'aspiration d'air (9, 10) affleurent le contour du canal de guidage d'air (4),
**caractérisé en ce que**
les ventilateurs sont réalisés sous la forme de ventilateurs radiaux.

2. Dossier conforme à la revendication 1,
**caractérisé en ce que**
les ventilateurs ont les mêmes dimensions et les mêmes puissances.

3. Dossier conforme à l'une des revendications précédentes,
**caractérisé en ce que**
les ventilateurs ont les mêmes dimensions mais des puissances différentes.

4. Dossier conforme à l'une des revendications précédentes,
**caractérisé en ce que**
dans chacune des branches (5, 6) est monté un élément chauffant (11, 12) à l'arrière du ventilateur dans la direction d'écoulement.

5. Dossier conforme à l'une des revendications précédentes,
**caractérisé en ce que**
chaque ventilateur peut être commandé séparément.

6. Dossier conforme à l'une des revendications précédentes,
**caractérisé en ce que**
chaque élément chauffant peut être commandé séparément.

7. Dossier conforme à l'une des revendications précédentes,
**caractérisé en ce que**
l'embouchure de chaque ouverture d'aspiration d'air (9, 10) des branches (5, 6) est située à la partie interne du dossier (1).

8. Dossier conforme à l'une des revendications précédentes,
**caractérisé en ce que**
l'embouchure de chaque ouverture d'aspiration d'air (9, 10) est située sur la face externe du dossier (1).

9. Dossier conforme à l'une des revendications précédentes,
**caractérisé en ce que**
l'embouchure de chaque ouverture d'aspiration d'air (9, 10) située sur la face externe du dossier (1) peut être fermée.
